# EUROPEAN PATENT APPLICATION

(11) **EP 4 807 650 A1**
(43) Date of publication of application: **16.09.2026**
(21) Application number: 25305337.5
(22) Date of filing: 13.03.2025
(51) Int. Cl.: G06Q 20/20, G06Q 20/32, G06Q 20/38

(54) **A METHOD AND A SYSTEM FOR PROCESSING A DIGITAL PAYMENT**

(71) Applicant: THALES DIS FRANCE SAS, 92190 Meudon (FR)
(72) Inventor: KUMAR, Vishal, 201303 Noida (IN); SHARMA, Dishant, 250002 Meerut (IN); GIRI, Rajkumar, 201301 Noida (IN)
(74) Representative: Grevin, Emmanuel

(57) **Abstract**

Embodiments of the present disclosure relates to a device, and a method for processing a digital payment. A method comprises the steps of receiving information relating to a digital payment, on a user interface of a software application executed by a first device associated with a digital payment sender. The method further comprises the step of generating a quick response (QR) code based on the information and encrypting the generated QR code. The method also comprises the steps of rendering the encrypted QR code for a second device associated with a digital payment recipient. Further, the steps of receiving, encrypting, generating and rendering are performed in an event the first device is offline. And the encrypted QR code is scanned by a software application executed by the second device in an event the second device is online.

## Description

### Field of the invention

The present disclosure relates to digital transaction systems and methods. More particularly, the embodiments of the present disclosure relate to a system and a method for processing a digital payment.

### Background of the invention

With the advent in the technology, digital payment solutions have replaced traditional offline payment solutions and have now become a preferred way for making any transaction. With the help of existing digital payment solutions, it has become easier to pay bills within a few minutes using a device at various places (such as restaurants, malls, hospitals etc.).

However, such existing digital payment solutions has its own downside. One of the downsides is the dependence of the device on a network to make a digital payment. If the device is not connected to any network, then, a user of the device is unable to make the digital payment. Thus, the device of the user needs proper network connectivity to make a successful digital payment.

Therefore, there is a need for an improved digital payment solution which offers a secure way of making the digital payment even when the device is in a no network zone. There is also a need for an improved solution which offers a real-time offline solution for making the digital payment.

### Summary of the Invention

In some exemplary embodiments, a method is provided for processing a digital payment. The method comprises the step of receiving information relating to a digital payment, on a user interface of a software application executed by a first device associated with a digital payment sender. The method comprises the steps of generating a quick response (QR) code based on the information relating to the digital payment and encrypting the generated QR code. The method comprises the step of rendering, at the user interface, the encrypted QR code for a second device associated with a digital payment recipient. Further, the steps of receiving the information, encrypting the information, generating the QR code and rendering the generated QR code are performed in an event the first device associated with the digital payment sender is offline. And, the encrypted QR code is scanned by a software application executed by the second device associated with the digital payment recipient in an event the second device associated with the digital payment recipient is online.

In some exemplary embodiments, a hash value of a unique identifier associated with the digital payment sender is computed and a hash value of a unique identifier associated with the digital payment recipient is computed.

In some exemplary embodiments, the second device associated with the digital payment recipient compares the hash value received from the first device with a hash value for checking the integrity of the digital payment recipient.

In some exemplary embodiments, the information relating to the digital payment comprises a unique identifier associated with the digital payment recipient and an amount of the digital payment to be paid to the digital payment recipient by the digital payment sender.

In some exemplary embodiments, the digital payment sender is in proximity with the digital payment recipient.

In some exemplary embodiments, the QR code is encrypted with a public key of the first device associated with the digital payment sender.

In some exemplary embodiments, the QR code comprises at least one of a hash value of a unique identifier associated with the digital payment sender, the unique identifier associated with the digital payment sender, a hash value of a unique identifier associated with the digital payment recipient, the unique identifier associated with the digital payment recipient, a timestamp of generating the QR code, an amount of the digital payment to be paid to the digital payment recipient by the digital payment sender, and a transaction time-based one-time password (TOTP).

In some exemplary embodiments, the second device communicates the encrypted QR code to a bank payment server for receiving the payment.

In some exemplary embodiments, the bank payment server decrypts the encrypted QR code with a private key of the digital payment sender.

In some exemplary embodiments, the software application executed by the first device and the software application executed by the second device belong to same bank or different banks.

In some exemplary embodiments, the payment is processed by the bank payment server by directly transmitting the digital payment from the bank account related to the digital payment sender to the bank account related to the digital payment recipient in an event of a successful decryption of the encrypted QR code.

In some exemplary embodiments, a first device for processing a digital payment is provided. The first device comprises a display configured to receive information relating to a digital payment, on a user interface of a software application executed by a first device associated with a digital payment sender. The first device comprises a processing unit configured to generate a quick response (QR) code based on the information relating to the digital payment and encrypt the generated QR code. The display is configured to render, at the user interface, the encrypted QR code for a second device associated with a digital payment recipient. Further, the steps of receiving the information, encrypting the information, generating the QR code and rendering the generated QR code are performed in an event the first device associated with the digital payment sender is offline. And, the encrypted QR code is scanned by a software application executed by the second device associated with the digital payment recipient in an event the second device associated with the digital payment recipient is online.

In some exemplary embodiments, the processing unit is further configured to compute a hash value of a unique identifier associated with the digital payment sender and a hash value of a unique identifier associated with the digital payment recipient.

In some exemplary embodiments, a non-transitory computer-readable medium storing computer-executable instructions is provided for processing a digital payment. The computer-executable instructions configured for receiving information relating to a digital payment, on a user interface of a software application executed by a first device associated with a digital payment sender. The computer-executable instructions configured for generating a quick response (QR) code based on the information relating to the digital payment and encrypting the generated QR code. The computer-executable instructions configured for rendering, at the user interface, the encrypted QR code for a second device associated with a digital payment recipient. Further, the steps of receiving the information, encrypting the information, generating the QR code and rendering the generated QR code are performed in an event the first device associated with the digital payment sender is offline. And, the encrypted QR code is scanned by a software application executed by the second device associated with the digital payment recipient in an event the second device associated with the digital payment recipient is online.

### Brief description of the drawings

Figure 1 illustrates an exemplary system architecture of the present disclosure, in accordance with an exemplary embodiment of the present disclosure,
Figure 2 illustrates an exemplary method flow diagram for processing a digital payment, in accordance with an exemplary embodiment of the present disclosure,
Figure 3A depicts an exemplary user interface for receiving information and Figure 3B depicts an exemplary quick response (QR) code, in accordance with an exemplary embodiment of the present disclosure, and
Figure 4 depicts a block diagram of a first device or a second device, in accordance with an exemplary embodiment of the present disclosure.

### Detailed description of the preferred embodiments

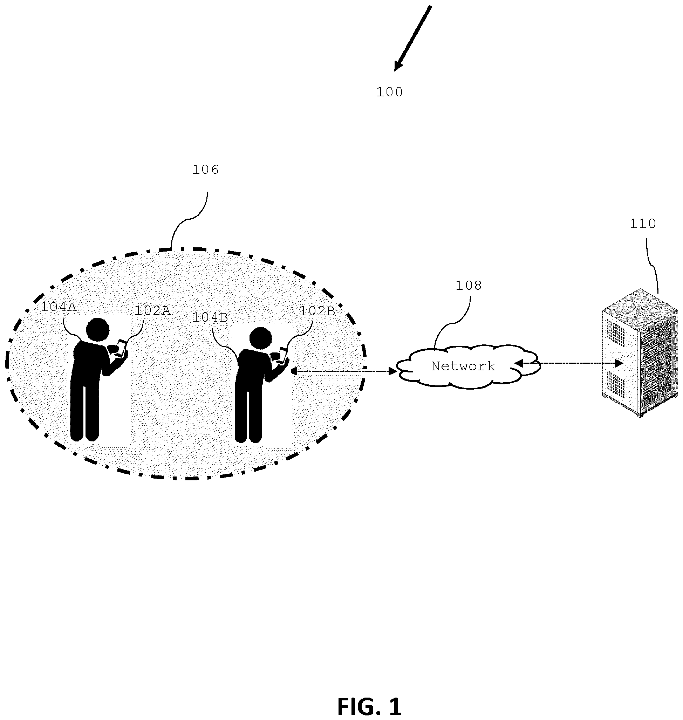

Figure 1 depicts an exemplary system architecture 100 in accordance with an exemplary embodiment of the present disclosure. The system architecture 100 comprises, but is not limited to, a first device 102A associated with a digital payment sender 104A, a second device 102B associated with a digital payment recipient 104B, a bank payment server 110 connected to the second device 102B through a network 108.

Herein, the first device 102A associated with the digital payment sender 104A may be offline and thus, may not be connected to the network 108. In a first exemplary embodiment, the first device 102A associated with the digital payment sender 104A may be in a restricted area/zone (may be a military area, war-zone area, a sensitive area etc.) where the first device 102A is restricted or disabled to use any network. In a second exemplary embodiment, the first device 102A associated with the digital payment sender 104A may be in an international country where the digital payment sender 104A has not activated the internal roaming service on the first device 102A. In a third exemplary embodiment, the digital payment sender 104A has not activated any data service for the first device 102A which allows the first device 102A to get connected to the network 108. In a fourth exemplary embodiment, the first device 102A has prepaid billing service activated which is disabled in a sensitive area by a government to use any network. In a fifth exemplary embodiment, the digital payment sender 104A does not want to use any internet and thereby, has intentionally turned-off the internet data. In a sixth exemplary embodiment, the digital payment sender 104A does not want to connect to any unsecured public network. In all such situations, the first device 102A associated with the digital payment sender 104A may be offline and thus, may not be connected to the network 108.

In some exemplary embodiments, the digital payment sender 104A may be in proximity 106 with the digital payment recipient 104B. That is, the digital payment sender 104A may be physically present in front of or near the digital payment recipient 104B. In other words, the digital payment sender 104A may not be physically or remotely far from the digital payment recipient 104B. As an example, the digital payment sender 104A and the digital payment recipient 104B may not necessarily be in different physical zones, areas, locations, cities, countries for making the digital payments.

As used herein, the term "bank payment server" may refer to a physical server in a data center or a cloud server running in a cloud computing environment and possessing the capabilities of performing the authentication procedures.

As used herein, the term "first device" or "second device" may refer to a smart device, a cellular device, a mobile phone, a smart watch, a tablet, a personal digital assistance, a laptop, a personal/desktop computer, a television or any such device that is obvious to a person skilled in the art.

As used herein, the term "network" may refer to a wired network or a wireless network. The wired network generally requires cables, ethernet or wires to connect the second device 102B with the network 108. The wireless network enables the second device 102B to get wirelessly connected with the network 108. Examples of such wireless network includes, but is not limited to, a cellular network (such as GSM network, CDMA Network or any other telecommunication mobile network) or a short-range network (Wi-Fi network, Near-field communication (NFC), a ZigBee network, a Bluetooth network etc.).

The first device 102A associated with the digital payment sender 104A who is using the first device 102A for various purposes as described herein. For an instance, the first device 102A wants to make a digital payment to the second device 102B associated with the digital payment recipient 104B for a service. Such service may be provided by the digital payment recipient 104B to the digital payment sender 104A. As an example, the digital payment sender 104A has purchased some groceries, food or clothes from the digital payment recipient 104B and now, have to make the digital payment to the digital payment recipient 104B.

For making the digital payment to the digital payment recipient 104B, the digital payment sender 104A uses the first device 102A and opens a software application executed by the first device 102A. In some exemplary embodiments, the software application executed by the first device 102A may be an application developed and/or owned by a banking or finance institute where the digital payment sender 104A has a bank account. In some other exemplary embodiments, the software application may be an application developed and owned by a third-party company offering contactless bank-to-bank payment services.

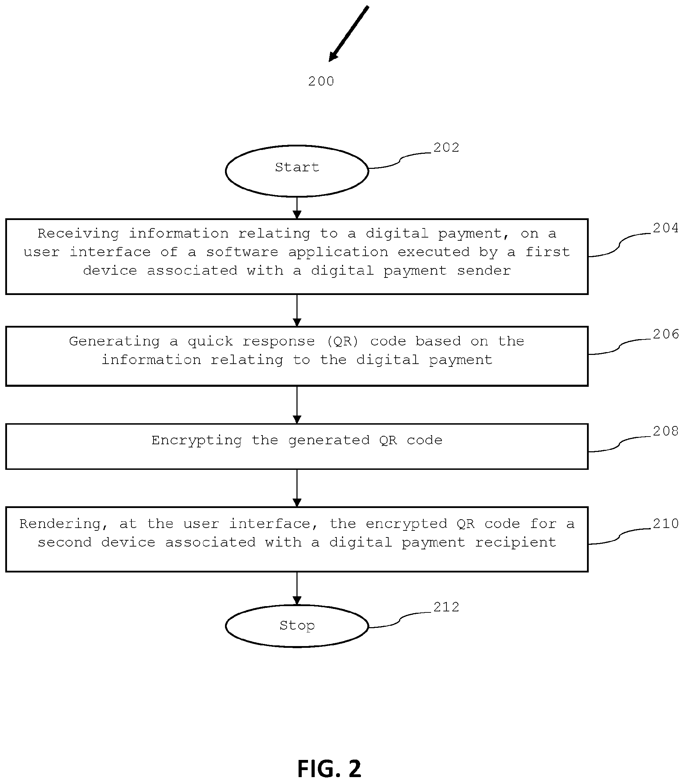

Figure 2 depicts an exemplary method flow diagram 200 for processing the digital payment, in accordance with an exemplary embodiment of the present disclosure. At step 202, the method flow diagram 200 starts.

At step 204, the software application executed by the first device 102A associated with the digital payment sender 104A, may receive information relating to the digital payment, on a user interface of the software application. For this, the digital payment sender 104A may open the software application executed by the first device 102A and may enter an amount of the digital payment at the user interface of the software application. Such amount of the digital payment is to be paid by the digital payment sender 104A to the digital payment recipient 104B. Herein, the digital payment sender 104A may also enter a unique identifier associated with the digital payment recipient 104B.

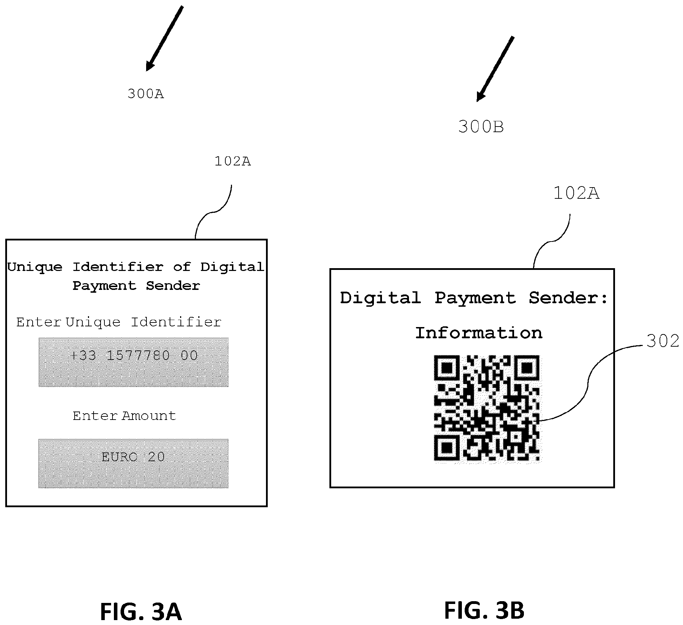

In some exemplary embodiments, the unique identifier associated with the digital payment recipient 104B may correspond to at least one of a virtual payment address (VPA) associated with the digital payment recipient 104B, a bank account related to the digital payment recipient 104B, and a mobile number of the digital payment recipient 104B. As an example, the user interface of the software application in Figure 3A shows the unique identifier as a mobile number of the digital payment recipient 104B and an amount of Euro 20 of the digital payment.

At step 206, the software application executed by the first device 102A associated with the digital payment sender 104A, may generate a secure quick response (QR) code based on the information relating to the digital payment. The information relating to the digital payment may comprise the unique identifier of the digital payment recipient 104B and an amount of the digital payment as shown in Figure 3A. Considering the example shown in Figure 3A, the mobile number (i.e. +33 1577780 00) of the digital payment recipient 104B and the amount of Euro 20 of the digital payment may be used by the QR code generator to generate the QR code 302 as shown in Figure 3B.

Further, the generated QR code 302 may comprise at least one of a first part and a second part. In some exemplary embodiment, the first part of the QR code comprises at least one of a hash value of the unique identifier associated with the digital payment sender 104A, and a hash value of the unique identifier associated with the digital payment recipient 104B. In other words, the first part of the QR code may comprise the unique identifier associated with the digital payment sender 104A, and the unique identifier associated with the digital payment recipient 104B. And then, a hash value of the first part may be computed which may then become a part of the generated QR code 302.

In some exemplary embodiment, the second part of the QR code 302 comprises the unique identifier associated with the digital payment sender 104A, the unique identifier associated with the digital payment recipient 104B, a timestamp of generating the QR code 302, an amount of the digital payment to be paid to the digital payment recipient 104B by the digital payment sender 104A, and a transaction time-based one-time password (TOTP). Herein, the second part of the QR code 302 may be digitally signed by the software application executed by the first device 102A associated with the digital payment sender 104A using a public key of the software application executed by the first device 102A.

In some exemplary embodiments, the unique identifier associated with the digital payment sender 104A may correspond to at least one of a virtual payment address (VPA) associated with the digital payment sender 104A, a bank account related to the digital payment sender 104A, and a mobile number of the digital payment sender 104A.

In some exemplary embodiments, the software application executed by the first device 102A associated with the digital payment sender 104A may compute a hash value of the unique identifier associated with the digital payment sender 104A and a hash value of the unique identifier associated with the digital payment recipient 104B. Such hash values may be computed using a hashing algorithm such as Message Digest (MD) 5, Secure Hash Algorithm (SHA) 2 and Cyclical Redundancy Checking (CRC) 32 which is obvious to a person skilled in the art.

Herein, the timestamp of generating the QR code 302 may refer to a time at which the QR code may be generated. As an example, the timestamp "27November2024-13:44:12:02" refers that the QR code is generated on 27^{th} date of November month of the year 2024 at 13^{th} hours, 44 minutes, 12 seconds and 02 milliseconds. Such timestamp of generating the QR code 302 may be used by the second device 102B associated with the digital payment recipient 104B or the bank payment sever 110 connected to the second device 102B to validate a payment request and process the payment. In case the timestamp of generating the QR code 302 and a time for decrypting the QR code by the bank payment sever 110 have a difference exceeding a pre-defined time interval (as an example, 1 minute), then, the bank payment server 110 may decline or reject the request for processing the digital payment.

Herein, the time-based one-time password (TOTP) may refer to a string of dynamic digits of code, which are changing based on time. In some exemplary embodiments, the TOTP may be configured between the software application executed by the first device 102A associated with the digital payment sender 104A and the bank payment sever 110 where the digital payment sender 104A has the bank account. When the digital payment sender 104A and the digital payment recipient 104B install the software application of a bank where the digital payment sender 104A has the bank account, TOTP keys may be pushed from the bank payment sever 110. Such TOTP keys may be changed, updated or rotated over a period of time. Thereby, the proposed disclosure is more secure as the TOTP keys are distributed over-the-air distribution to the software application executed by the first device 102A. Thus, the proposed disclosure offers more flexibility in key management/distribution and doesn't tie the first device 102A to specific merchants or require factory configuration.

In some exemplary embodiments, a public/private key pair of the software application executed by the first device 102A associated with the digital payment sender 104A and the TOTP keys are stored or managed or configured at the bank payment sever 110. In some other exemplary embodiments, the public/private key pair of the software application executed by the first device 102A associated with the digital payment sender 104A and the with the TOTP keys are stored or managed or configured at different servers to avoid the single point of failure. With the public/private key pair data and the TOTP keys stored separately, the potential impact of a server breach is significantly reduced and minimizing trust in central authorities, a key tenet of modern cryptographic system design.

Herein, the QR code may refer to a machine-readable code comprising an array of black and white squares, used for storing information for reading by a camera on a user device. Such QR code may be generated by utilizing a QR code generator inside the software application executed by the first device 102A. As used herein, the QR code generator may be a code generator which may be obvious to a person skilled in the art.

At step 208, the software application executed by the first device 102A associated with the digital payment sender 104A, may encrypt the generated QR code. Herein, the generated QR code may be encrypted with a public key of the software application executed by the first device 102A associated with the digital payment sender 104A. In some exemplary embodiments, the asymmetric key algorithm is utilized by the first device 102A to encrypt the generated QR code. Such as Rivest Shamir Adleman (RSA) Digital Signature Standard (DSS), which incorporates the Digital Signature Algorithm (DSA), or Elliptical Curve Cryptography (ECC) or any such asymmetric key algorithm may be used.

At step 210, the software application executed by the first device 102A associated with the digital payment sender 104A, may render the encrypted QR code for the second device 102B associated with the digital payment recipient 104B. Such encrypted QR code may be rendered at the user interface of the software application executed by the first device 102A associated with the digital payment sender 104A. Herein, the user interface of the software application may be displayed at a display of the first device 102A.

Step 204, step 206, step 208 and step 210 of the method flow diagram 200 may be performed by the software application executed by the first device 102A in an event the first device 102A associated with the digital payment sender 104A is offline as explained above in Figure 1.

Further, the encrypted QR code may be scanned by a software application executed by the second device 102B associated with the digital payment recipient 104B in an event the second device 102B associated with the digital payment recipient 104B is online. Herein, the second device 102B associated with the digital payment recipient 104B is online may refer that the second device 102B is connected to the network 108.

At step 212, the method flow diagram 200 ends.

In some exemplary embodiments, the software application executed by the second device 102B may be an application developed and/or owned by a banking or finance institute where the digital payment recipient 104B has a bank account. In some other exemplary embodiments, the software application may be an application developed and owned by a third-party company offering contactless bank-to-bank payment services.

In some exemplary embodiments, the software application executed by the first device 102A and the software application executed by the second device 102B may belong to the same bank if the digital payment sender 104A and the digital payment recipient 104B has their bank account with the same bank. In some other exemplary embodiments, the software application executed by the first device 102A and the software application executed by the second device 102B may belong to the different banks if the digital payment sender 104A and the digital payment recipient 104B has their bank account with different banks.

Further, the software application executed by the second device 102B associated with the digital payment recipient 104B computes a hash value of the scanned QR code for checking the integrity of identity of the digital payment recipient 104B. For computing the hash value, the software application executed by the second device 102B may use the same hashing algorithm as used by the first device 102A. Then, the software application executed by the second device 102B may compare the computed hash value with the hash value received from the first part of the scanned QR code. If the computed hash value matches with the hash value received from the first part of the scanned QR code, then, the identity of the digital payment recipient 104B is verified by the software application executed by the second device 102B. If the computed hash value does not match with the hash value received from the first part of the scanned QR code, then, the identity of the digital payment recipient 104B is not verified by the software application executed by the second device 102B and thus, the payment request is not further processed.

On verifying the identity of the digital payment recipient 104B, the software application executed by the second device 102B may communicate with a transmitter of the second device 102B to communicate with the bank payment server 110 through the network 108. Such communication by the second device 102B with the bank payment server 110 through the network 108 involves communicating the second part of the encrypted QR code to the bank payment server for receiving the payment. Herein, the bank payment server 110 may be associated with a banking or finance institute where the digital payment sender 104A has a bank account.

When the bank payment server 110 receives the second part of the encrypted QR code from the second device 102B, the bank payment server 110 decrypts the second part of the encrypted QR code with a private key of the first device 102A associated with the digital payment sender 104A. Such private key of the first device 102A may already be stored at the bank payment server 110 by the digital payment sender 104A. Herein, the bank payment server 110 uses the same asymmetric key algorithm as utilized by the first device 102A at step 208 of the method flow diagram 200.

On decrypting the second part of the encrypted QR code with the private key of the first device 102A, the bank payment server 110 may extract least one of , the unique identifier associated with the digital payment sender 104A, , the unique identifier associated with the digital payment recipient 104B, the timestamp of generating the QR code, the amount of the digital payment to be paid to the digital payment recipient by the digital payment sender, and the TOTP.

Furthermore, the bank payment server 110 may use the TOTP and the timestamp of generating the QR code to verify the payment request before processing the digital payment. Then, by using the unique identifier associated with the digital payment sender 104A, the bank payment server 110 may check a current balance amount in the bank account of the digital payment sender 104A. If the bank account of the digital payment sender 104A has sufficient balance, then the bank payment server 110 may process the digital payment to pay the amount of the digital payment to be paid to the digital payment recipient 104B by the digital payment sender 104A. For processing the payment, the bank payment server 110 may use the unique identifier associated with the digital payment recipient 104B to communicate with a bank payment server (not shown) related to a bank account of the digital payment recipient 104B and may transfer the digital payment amount. In some exemplary embodiments, the digital payment sender 104A and the digital payment recipient 104B may have their respective bank account in the same bank. In some other exemplary embodiments, the digital payment sender 104A and the digital payment recipient 104B has their bank account with different banks.

Thereby, the bank payment server 110 may directly transmit the digital payment from the bank account related to the digital payment sender 104A to the bank account related to the digital payment recipient 104B in an event of a successful decryption of the encrypted QR code. On successful processing of the payment, the digital payment recipient 104B may be notified by the bank payment server 110 and/or the bank payment server of a bank account of the digital payment recipient 104B.

Therefore, the present disclosure offers a secure way of making the digital payment even when the first device 102A is in a no network zone. The present disclosure offers a offers a real-time offline solution for making the digital payment to the second device 102B.

In some exemplary embodiments, a non-transitory computer-readable medium storing computer-executable instructions is provided for processing a digital payment. The computer-executable instructions configured for receiving information relating to a digital payment, on a user interface of a software application executed by a first device 102A associated with a digital payment sender 104A. The computer-executable instructions is also configured for generating a quick response (QR) code based on the information relating to the digital payment. The computer-executable instructions is further configured for encrypting the generated QR code. The computer-executable instructions configured for rendering, at the user interface, the encrypted QR code for a second device 102B associated with a digital payment recipient 104B. Further, the steps of receiving the information, encrypting the information, generating the QR code and rendering the generated QR code are performed in an event the first device 102A associated with the digital payment sender 104A is offline. And, the encrypted QR code is scanned by a software application executed by the second device 102B associated with the digital payment recipient 104B in an event the second device 102B associated with the digital payment recipient 104B is online.

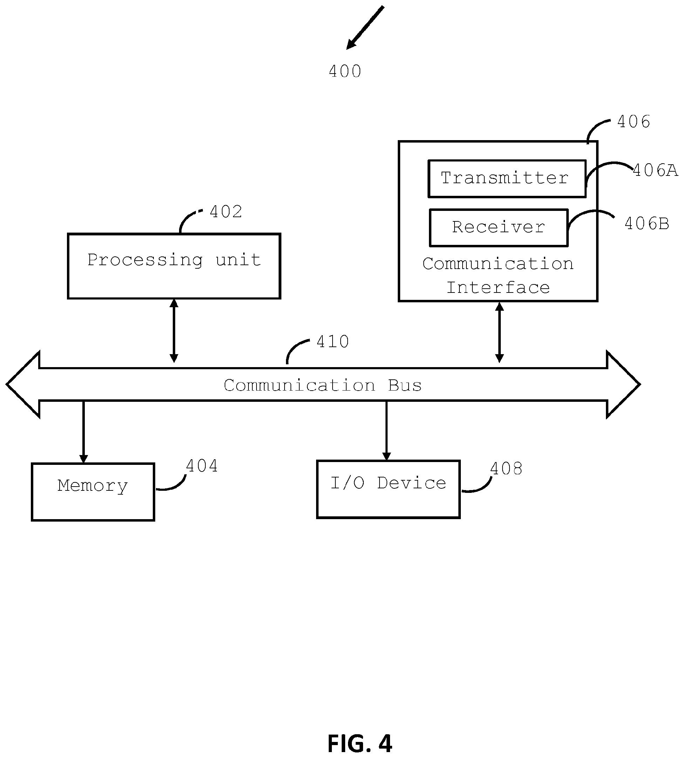

Figure 4 depicts a block diagram of the first/second device 102A/102B, in accordance with an exemplary embodiment of the present disclosure. The first/second device 102A/102B may include processing unit 402, memory 404, a communication interface 406, and input/output devices 408. Each of these components may be operatively coupled to a communication bus 410, which may be configured, e.g., for optical and/or electrical communication.

The processing unit 402 may include a central processing unit, application-specific integrated circuit (ASIC), digital signal processor (DSP), or another type of processing circuit. The processing unit 402 may be implemented using mainframe, distributed processor, multi-core, parallel, grid, or other architectures. The processing unit 402 may be configured to implement the functions, procedures, and/or methods proposed by the present invention as described in the above Figures. Further, layers of a wireless interface protocol may be implemented by the processing unit 402.

The memory 404 may be any suitable medium that participates in providing instructions to the processing unit 402 for execution. For example, the memory 404 may be non-transitory or non-volatile medium, such as a magnetic disk or solid-state non-volatile memory or volatile medium such as random-access memory (RAM). The instructions or modules stored on memory 404 may include machine-readable instructions executed by the processing unit 402 that cause the processing unit 402 to perform the methods and functions as described herein.

Further, the memory 404 may be communicatively coupled to the processing unit 402 and store information related to operations of the processing unit 408. The memory 404 may be located inside or outside the processing unit 402 and may be connected to processing unit 408 through various well-known means.

The communication interface 406 may use any apparatus such as a transceiver or an RF module to communicate with another device or the network 104 such as the Ethernet, a radio access network (RAN), or a wireless local area network (WLAN). In other examples, the communication interface 406 may be a Local Area Network (LAN) interface, a wireless 802.11x interface, a 3G, 4G, 5G, or 6G mobile WAN or a WiMax WAN. In particular, the communication interface 406 may comprise a transmitter 406A and a receiver 406B for communicating with other devices/servers when connected with the network 108.

The input/output devices 408 may include one or more input and output devices. The input device may be a keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. The output device may be a printer, fax machine, a display, (may be a video display, a liquid crystal display (LCD), light-emitting diode (LED) display etc.), Organic-LED (OLED), Quantum Dot Light Emitting Diode (QLED), Micro LED, Mini-LED, Quantum Dot OLED (QD-OLED), audio speaker, etc.

The display 408 (i.e. input/output devices) may be configured to receive information relating to a digital payment, on a user interface of a software application executed by a first device 102A associated with a digital payment sender 104A. The processing unit 402 may be configured to generate a quick response (QR) code based on the information relating to the digital payment. The processing unit 402 may also be configured to encrypt the generated QR code. The display 408 may also be configured to render, at the user interface, the encrypted QR code for a second device 102B associated with a digital payment recipient 104B. Further, the steps of receiving the information, encrypting the information, generating the QR code and rendering the generated QR code are performed in an event the first device 102A associated with the digital payment sender 104A is offline. And, the encrypted QR code is scanned by a software application executed by the second device 102B associated with the digital payment recipient 104B in an event the second device 102B associated with the digital payment recipient 104B is online.

Implementations and all of the functional operations described in this description may be realized in digital electronic circuitry, or in computer software, firmware, or hardware, including the structures disclosed in this description and their structural equivalents, or in combinations of one or more of them.

The foregoing discussion of the disclosure has been presented for purposes of illustration and description. The foregoing is not intended to limit the disclosure to the form or forms disclosed herein. In the foregoing detailed description for example, various features of the disclosure are grouped together in one or more examples, configurations, or aspects for the purpose of streamlining the disclosure. The features of the examples, configurations, or aspects of the disclosure may be combined in alternate examples, configurations, or aspects other than those described above. Hence, the present disclosure and drawings should not be considered in a limiting sense, as it is understood that an invention presented within a disclosure is in no way limited to those examples specifically illustrated.

Accordingly, the above description and any accompanying drawings, illustrations, and figures are intended to be illustrative but not restrictive. The scope of any invention presented within this disclosure should, therefore, be determined not with simple reference to the above description and those examples shown in the figures, but instead should be determined with reference to the pending claims along with their full scope or equivalents.

## Claims

1. A method for processing a digital payment, the method comprising the steps of:
- receiving information relating to a digital payment, on a user interface of a software application executed by a first device associated with a digital payment sender;
- generating a quick response (QR) code based on the information relating to the digital payment;
- encrypting the generated QR code; and
- rendering, at the user interface, the encrypted QR code for a second device associated with a digital payment recipient, wherein
the steps of receiving the information, encrypting the information, generating the QR code and rendering the generated QR code are performed in an event the first device associated with the digital payment sender is offline, and
the encrypted QR code is scanned by a software application executed by the second device associated with the digital payment recipient in an event the second device associated with the digital payment recipient is online.

2. The method according to claim 1, further comprising, computing a hash value of a unique identifier associated with the digital payment sender and computing a hash value of a unique identifier associated with the digital payment recipient.

3. The method according to claim 2, wherein the second device associated with the digital payment recipient compares the hash value received from the first device with a hash value for checking the integrity of the digital payment recipient.

4. The method according to any previous claims, wherein the information relating to the digital payment comprises a unique identifier associated with the digital payment recipient and an amount of the digital payment to be paid to the digital payment recipient by the digital payment sender.

5. The method according to any previous claims, wherein the digital payment sender is in proximity with the digital payment recipient.

6. The method according to any previous claims, wherein the QR code is encrypted with a public key of the first device associated with the digital payment sender.

7. The method according to claim 4, wherein the QR code comprises at least one of a hash value of a unique identifier associated with the digital payment sender, the unique identifier associated with the digital payment sender, a hash value of a unique identifier associated with the digital payment recipient, the unique identifier associated with the digital payment recipient, a timestamp of generating the QR code, an amount of the digital payment to be paid to the digital payment recipient by the digital payment sender, and a transaction time-based one-time password (TOTP).

8. The method according to any previous claims, wherein the second device communicates the encrypted QR code to a bank payment server for receiving the payment.

9. The method according to claim 8, wherein the bank payment server decrypts the encrypted QR code with a private key of the digital payment sender.

10. The method according to any previous claims, wherein the software application executed by the first device and the software application executed by the second device belong to same bank or different banks.

11. The method according to claim 9, wherein the payment is processed by the bank payment server by directly transmitting the digital payment from the bank account related to the digital payment sender to the bank account related to the digital payment recipient in an event of a successful decryption of the encrypted QR code.

12. A first device for processing a digital payment, the first device comprising:
- a display configured to receive information relating to a digital payment, on a user interface of a software application executed by a first device associated with a digital payment sender;
- a processing unit configured to:
generate a quick response (QR) code based on the information relating to the digital payment; and
encrypt the generated QR code; and
- the display configured to render, at the user interface, the encrypted QR code for a second device associated with a digital payment recipient, wherein
the steps of receiving the information, encrypting the information, generating the QR code and rendering the generated QR code are performed in an event the first device associated with the digital payment sender is offline, and
the encrypted QR code is scanned by a software application executed by the second device associated with the digital payment recipient in an event the second device associated with the digital payment recipient is online.

13. The first device according to any previous claims, the processing unit is further configured to compute a hash value of a unique identifier associated with the digital payment sender and a hash value of a unique identifier associated with the digital payment recipient.

14. The first device according to any previous claims, wherein the QR code is encrypted with a public key of the first device associated with the digital payment sender.

15. A non-transitory computer-readable medium storing computer-executable instructions for processing a digital payment, the computer-executable instructions configured for:
- receiving information relating to a digital payment, on a user interface of a software application executed by a first device associated with a digital payment sender;
- generating a quick response (QR) code based on the information relating to the digital payment;
- encrypting the generated QR code; and
- rendering, at the user interface, the encrypted QR code for a second device associated with a digital payment recipient, wherein
the steps of receiving the information, encrypting the information, generating the QR code and rendering the generated QR code are performed in an event the first device associated with the digital payment sender is offline, and
the encrypted QR code is scanned by a software application executed by the second device associated with the digital payment recipient in an event the second device associated with the digital payment recipient is online.
